# DEMANDE DE BREVET EUROPEEN

(11) **EP 2 998 896 A1**
(43) Date de publication de la demande: **23.03.2016**
(21) Numéro de dépôt: 14306437.6
(22) Date de dépôt: 17.09.2014
(51) Int. Cl.: G06F 21/34, G06F 21/36

(54) **Procédé d'authentification d'un utilisateur, terminaux et système d'authentification correspondants**

(71) Demandeur: GEMALTO SA, 92190 Meudon (FR)
(72) Inventeur: Glousieau, Julien, 13881 Gemenos Cedex (FR); El Marouani, Abdellah, 13881 Gemenos Cedex (FR)

(57) **Abrégé**

L'invention concerne notamment un procédé d'authentification d'un utilisateur (30) auprès d'un premier terminal (32) ou d'un serveur distant (50) connecté au premier terminal (32), l'authentification consistant à entrer un code dans le premier terminal (32) par l'utilisateur (30) et à comparer ce code à un code personnel confidentiel de l'utilisateur (30), le code personnel confidentiel comprenant des symboles à entrer successivement par l'utilisateur (30) dans le premier terminal (32).

Selon l'invention, le procédé consiste à :
a. Transmettre du premier terminal (32) à un second terminal (33) appartenant à l'utilisateur une série désordonnée de symboles dont un sous-ensemble constitue le code personnel confidentiel ;
b. Afficher sur un écran du second terminal (33) la série désordonnée de symboles dans une grille (37), appelée seconde grille (37), chaque symbole de la série étant contenu dans une case de la seconde grille (37) ;
c. Entrer, par l'utilisateur (30) sur le premier terminal (32), le code personnel confidentiel dans une grille (39), appelée première grille (39), aux emplacements correspondants des symboles du code personnel confidentiel dans la seconde grille (37) ;
d. Vérifier, au niveau du premier terminal (32) ou du serveur distant (50), que la série de symboles entrés par l'utilisateur (30) est identique au code personnel confidentiel, afin d'authentifier l'utilisateur (30).

## Description

La présente invention relève du domaine des télécommunications et concerne un procédé permettant d'entrer un code personnel confidentiel, par exemple un code PIN, dans un terminal, dans un environnement non sécurisé. Le terminal est par exemple un terminal d'un point de vente, un distributeur de billets, un smartphone ou une tablette d'ordinateur connectée à un site Internet demandant à un utilisateur de s'authentifier.

Pour cette authentification, l'utilisateur entre classiquement un code personnel confidentiel sur un écran tactile affichant des chiffres de 0 à 9.

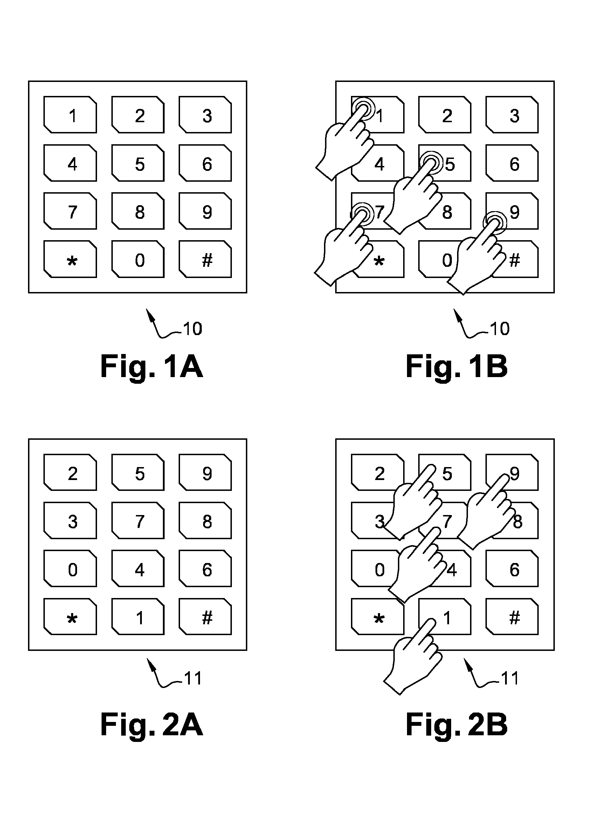

La figure 1A représente un tel écran tactile.

Un écran tactile 10 affiche une grille de douze cases dans lesquelles les chiffres 0 à 9 et les caractères * et # sont affichés. Ici, les chiffres sont ordonnés dans la grille, c'est-à-dire qu'ils se suivent logiquement parlant (1 à 3 dans la première ligne, 4 à 6 dans la seconde ligne, 7 à 8 dans la troisième ligne et 0 en position centrale dans la dernière ligne). L'utilisateur est alors invité à entrer son code personnel confidentiel.

Pour ce faire, comme représenté à la figure 1B, l'utilisateur appuie successivement avec un de ses doigts sur les touches affichant les symboles de son code personnel confidentiel. Ici, son code personnel confidentiel est par exemple 1759 et l'utilisateur appuie successivement sur les touches 1, 7, 5 puis 9.

Le code entré par l'utilisateur est alors comparé avec le code personnel confidentiel de l'utilisateur. Ce code personnel confidentiel peut être compris dans une carte à puce de l'utilisateur, cette carte à puce ayant préalablement été insérée dans un lecteur coopérant avec le terminal. Le code personnel confidentiel peut aussi être stocké au niveau d'un serveur distant connecté au terminal.

Que ce soit au niveau du terminal ou du serveur distant, l'authentification de l'utilisateur est positive si le code entré par l'utilisateur correspond au code personnel confidentiel de la carte de l'utilisateur ou à celui stocké au niveau du serveur distant (typiquement pour s'authentifier auprès d'un site Internet, par exemple auprès d'un site bancaire) et négative dans le cas contraire.

L'inconvénient de la solution des figures 1A et 1B est qu'une personne malveillante peut, après le départ de l'utilisateur, observer à quels emplacements de l'écran tactile 10 l'utilisateur a posé son doigt pour en déduire le code sans ambiguïté, puisque les symboles (ici des chiffres) affichés sont ordonnés (au prochain affichage de la grille, les symboles 0 à 9 sont aux mêmes emplacements dans la grille).

Afin de remédier à cet inconvénient, il est connu de mélanger les symboles dans la grille, comme représenté à la figure 2A.

La figure 2A représente un écran tactile 11 qui affiche comme précédemment une grille de douze cases dans lesquelles les chiffres 0 à 9 et les caractères * et # sont affichés.

Ici, contrairement à la figure 1A, les symboles (chiffres) sont désordonnés (mélangés) dans la grille. Comme le mélange des symboles dans la grille diffère à chaque affichage (les symboles ne sont pas tous aux mêmes emplacements d'un affichage à l'autre), une personne mal intentionnée ne peut pas connaître le code composé par l'utilisateur en observant simplement la surface de l'écran après le départ de l'utilisateur. L'utilisateur est ensuite invité à entrer son code personnel confidentiel, ce qu'il fait en composant successivement les symboles 1,7,5 puis 9 (figure 2B).

Cette solution, bien que très répandue, souffre néanmoins d'un handicap majeur : si une personne mal intentionnée observe l'utilisateur pendant qu'il compose son code personnel confidentiel (regarde par exemple au-dessus de son épaule), cette personne prend connaissance du code et peut par la suite l'utiliser à l'insu de l'utilisateur. Il en va de même si une caméra filme l'entrée des symboles par l'utilisateur ou si un logiciel malveillant a été installé dans le terminal. Ce logiciel peut par exemple enregistrer sur quelle touche l'utilisateur a successivement posé son doigt et, à la connaissance de la disposition des symboles dans la grille, en déduire le code composé par l'utilisateur.

La présente invention a notamment pour objectif de pallier cet inconvénient.

Plus précisément, un des objectifs de l'invention est de fournir un procédé permettant d'assurer la confidentialité d'entrée des symboles constitutifs d'un code personnel confidentiel dans une grille affichée sur un écran tactile.

Cet objectif ainsi que d'autres qui apparaîtront par la suite, est atteint grâce à un procédé d'authentification d'un utilisateur auprès d'un premier terminal ou d'un serveur distant connecté au premier terminal, l'authentification consistant à entrer un code dans le premier terminal par l'utilisateur et à comparer ce code à un code personnel confidentiel de l'utilisateur, le code personnel confidentiel comprenant des symboles à entrer successivement par l'utilisateur dans le premier terminal, le procédé consistant à :
a. Transmettre du premier terminal à un second terminal appartenant à l'utilisateur une série désordonnée de symboles dont un sous-ensemble constitue le code personnel confidentiel ;
b. Afficher sur un écran du second terminal la série désordonnée de symboles dans une grille, appelée seconde grille, chaque symbole de la série étant contenu dans une case de la seconde grille ;
c. Entrer, par l'utilisateur sur le premier terminal, le code personnel confidentiel dans une grille, appelée première grille, aux emplacements correspondants des symboles du code personnel confidentiel dans la seconde grille ;
d. Vérifier, au niveau du premier terminal ou du serveur distant, que la série de symboles entrés par l'utilisateur est identique au code personnel confidentiel, afin d'authentifier l'utilisateur.

Avantageusement, l'étape -a- comprend une étape d'affichage sur un écran coopérant avec le premier terminal d'une image chiffrée comprenant une série désordonnée de symboles dont un sous-ensemble constitue le code personnel confidentiel, et l'étape -b- comprend une étape de déchiffrement, à l'aide du second terminal, de l'image chiffrée à l'aide d'une caméra prévue sur le second terminal et d'une clé de déchiffrement.

Dans un autre mode de mise en oeuvre, l'étape -a- comprend une étape de transmission par une connexion radio courte distance ou d'une connexion réseau local de la série désordonnée de symboles du premier terminal au second terminal.

L'image chiffrée est préférentiellement un code QR.

Le second terminal est préférentiellement constitué par un smartphone ou par des lunettes intelligentes.

Le premier terminal est préférentiellement un distributeur de billets ou un terminal d'un point de vente.

L'invention concerne également un terminal, appelé premier terminal, ce terminal comportant des moyens pour :
a. Transmettre à un second terminal appartenant à un utilisateur une série désordonnée de symboles dont un sous-ensemble constitue un code personnel confidentiel de l'utilisateur ;
b. Afficher une première grille virtuelle dans laquelle l'utilisateur peut sélectionner des emplacements correspondant à des emplacements de symboles affichés dans une seconde grille sur le second terminal.

Ce premier terminal comprend avantageusement également des moyens pour vérifier que la série de symboles entrés par l'utilisateur dans la première grille virtuelle est identique au code personnel confidentiel, afin d'authentifier l'utilisateur.

Alternativement, le premier terminal comprend également des moyens pour transmettre la série de symboles entrés par l'utilisateur dans la première grille virtuelle à un serveur distant.

L'invention concerne également un terminal d'utilisateur, appelé second terminal, ce second terminal comprenant des moyens pour :
a. Recevoir d'un premier terminal une série désordonnée de symboles dont un sous-ensemble constitue un code personnel confidentiel de l'utilisateur ;
b. Afficher sur un écran du second terminal la série désordonnée de symboles dans une grille, appelée seconde grille, chaque symbole de la série étant contenu dans une case de la seconde grille.

Préférentiellement, le terminal d'utilisateur comprend également des moyens de déchiffrement d'une image chiffrée affichée sur un écran du premier terminal à l'aide d'une caméra prévue sur le second terminal et d'une clé de déchiffrement, l'image chiffrée comprenant la série désordonnée de symboles dont un sous-ensemble constitue le code personnel confidentiel de l'utilisateur.

Le terminal d'utilisateur est préférentiellement constitué par des lunettes intelligentes.

L'invention concerne également un système d'authentification d'un utilisateur auprès d'un premier terminal ou d'un serveur distant connecté au premier terminal, l'authentification consistant à entrer un code dans le premier terminal par l'utilisateur et à comparer ce code à un code personnel confidentiel de l'utilisateur, le code personnel confidentiel comprenant des symboles à entrer successivement par l'utilisateur dans le premier terminal, ce système comprenant :
a. Des moyens pour transmettre du premier terminal à un second terminal appartenant à l'utilisateur une série désordonnée de symboles dont un sous-ensemble constitue le code personnel confidentiel ;
b. Des moyens pour afficher sur un écran du second terminal la série désordonnée de symboles dans une grille, appelée seconde grille, chaque symbole de la série étant contenu dans une case de la seconde grille ;
c. Des moyens pour saisir, par l'utilisateur sur le premier terminal, le code personnel confidentiel dans une grille, appelée première grille, aux emplacements correspondants des symboles du code personnel confidentiel dans la seconde grille ;
d. Des moyens pour vérifier, au niveau du premier terminal ou du serveur distant, que la série de symboles entrés par l'utilisateur est identique au code personnel confidentiel, afin d'authentifier l'utilisateur.

Avantageusement, le système comprend également :
a- des moyens pour afficher sur un écran coopérant avec le premier terminal une image chiffrée comprenant une série désordonnée de symboles dont un sous-ensemble constitue le code personnel confidentiel ;
b- des moyens pour déchiffrer, à l'aide du second terminal, l'image chiffrée à l'aide d'une caméra prévue sur le second terminal et d'une clé de déchiffrement.

D'autres caractéristiques et avantages de l'invention apparaîtront à la lecture de la description suivante de deux modes de mise en oeuvre particuliers, donnés à titre explicatif et non limitatif, et des figures annexées dans lesquelles :
- les figures 1A et 1B représentent respectivement des symboles ordonnés dans un grille affichée sur un écran tactile et l'appui successif des symboles constitutifs d'un code personnel confidentiel par un utilisateur ;
- les figures 2A et 2B représentent respectivement des symboles désordonnés dans un grille affichée sur un écran tactile et l'appui successif des symboles constitutifs d'un code personnel confidentiel par un utilisateur ;
- la figure 3 représente un premier mode de mise en oeuvre de l'invention ;
- la figure 4 représente un second mode de mise en oeuvre de l'invention.

Les figures 1A à 2B ont été décrites précédemment en référence à l'état de la technique.

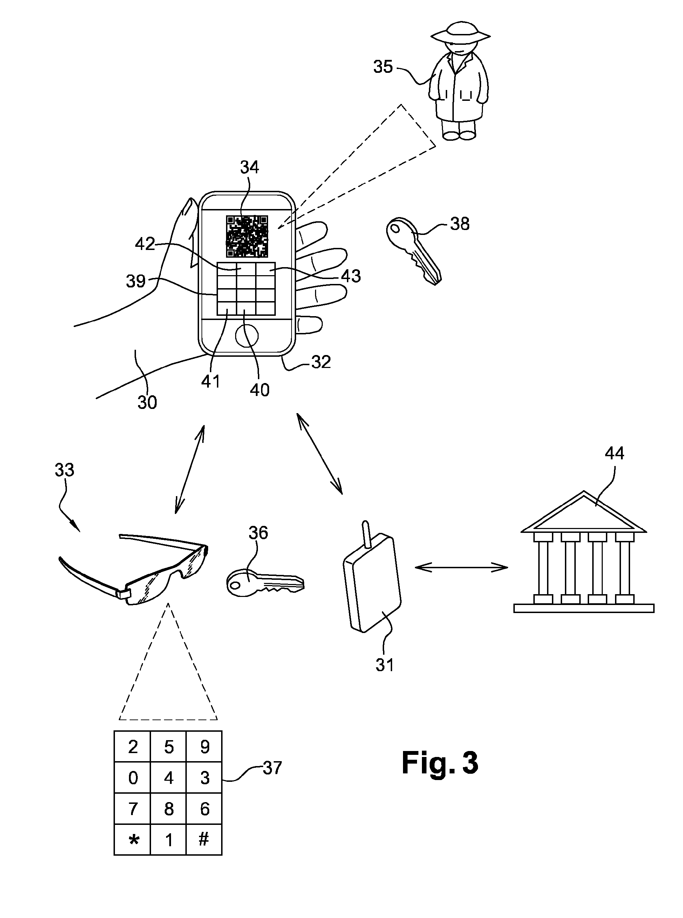

La figure 3 représente un premier mode de mise en oeuvre de l'invention.

Dans cette figure, il est procédé à l'authentification d'un utilisateur 30 auprès d'un commerçant disposant d'un lecteur NFC 31 (une authentification d'un utilisateur en NFC est requise pour des montants de transaction dépassant une somme prédéterminée, par exemple 20 Euros). L'utilisateur dispose de son smartphone 32 comprenant une application de paiement NFC. Le smartphone 32 sera par la suite appelé premier terminal et comprend un écran tactile permettant à l'utilisateur d'entrer son code personnel confidentiel après avoir approché (effectué un « tap ») une première fois son smartphone 32 du lecteur NFC 31.

De même que dans l'état de la technique, l'authentification consiste à entrer manuellement un code dans le premier terminal 32 et à comparer ce code à un code personnel confidentiel de l'utilisateur, le code personnel confidentiel comprenant des symboles à entrer successivement par l'utilisateur dans le premier terminal.

Selon l'invention, il est fait appel à un second terminal 33 appartenant à l'utilisateur 30. Le second terminal 33 est ici représenté sous la forme d'une paire de lunettes intelligentes, de type Google Glass (marque protégée). Une lunette intelligente est un système optronique permettant d'afficher des informations (texte, image,...) en surimpression du champ visuel de l'utilisateur. Les lunettes intelligentes 33 peuvent potentiellement (mais pas nécessairement) être connectées à un réseau télécom (3G/4G) ou à un réseau domestique (via Wifi).

L'invention fonctionne de la manière suivante, dans ce premier mode de mis en oeuvre :
Le premier terminal 32 génère une image chiffrée 34 qui s'affiche sur son écran. L'image 34 a été chiffrée à l'aide d'une clé 38. L'image chiffrée 34 est ici un code QR et contient une série désordonnée de symboles dont un sous-ensemble constitue le code personnel confidentiel de l'utilisateur. Une personne mal intentionnée 35 qui verrait l'écran du terminal 32 ne verrait que cette image chiffrée 34 et ne pourrait en tirer aucune information exploitable, car elle ne connaît pas la clé permettant de déchiffrer l'image 34.

En revanche, le second terminal 33 de l'utilisateur comprend la clé de déchiffrement 36 de l'image 34. A l'aide d'une caméra équipant le second terminal 33 (les lunettes intelligentes sont pourvues de caméras), l'image chiffrée 34 est filmée ou une photo de cette dernière est prise par le second terminal 33. A l'aide de la clé de déchiffrement 36 comprise dans le second terminal 33, l'image 34 est déchiffrée et affichée sur l'écran de ce second terminal 33. Dans le cas de lunettes intelligentes, une série désordonnée de symboles est affichée sur au moins l'un des verres des lunettes. Dans le cas d'utilisation d'un smartphone pourvu d'une caméra (l'utilisateur détient deux smartphones, celui référencé 32 et un autre), la série désordonnée de symboles est affichée sur l'écran du smartphone.

La série désordonnée de symboles est représentée placée dans une grille référencée 37, appelée seconde grille, dans la figure 3. Au moins les symboles du code personnel confidentiel de l'utilisateur sont présents dans la seconde grille 37. Ici, pour reprendre l'exemple du code 1759 donné précédemment, les symboles sont des chiffres (0 à 9). Un des points importants est qu'au moins les symboles du code personnel confidentiel soient désordonnés dans la seconde grille 37, c'est-à-dire qu'ils ne soient pas aux mêmes emplacements d'une authentification à une autre.

L'utilisateur, à la vue de la seconde grille 37, connaît les emplacements des symboles de son code dans la seconde grille 37. Il entre alors manuellement les symboles de son code personnel confidentiel dans une grille 39, appelée première grille, aux emplacements correspondants des symboles de son code personnel confidentiel dans la seconde grille 37. A titre d'exemple, si son code personnel confidentiel est 1759, il appuie successivement sur les emplacements référencés respectivement 40, 41, 42 puis 43.

Dans le cas où le premier terminal 32 est un smartphone, le clavier est tactile et il y a donc affichage d'une grille virtuelle 39, de même forme que la seconde grille 37. Il n'y a pas de limitation sur la taille des cases : les cases peuvent ne pas être toutes de la même taille. Leur nombre n'est pas non plus limité. Il n'y a pas non plus de limitation sur la forme des cases : les cases peuvent être des rectangles, des cercles, des carrés, des losanges,...

Dans le cas où le premier terminal 32 est un terminal de paiement chez un marchand, il peut avoir des touches physiques (touches à enfoncer). Il s'agit alors d'un véritable clavier comportant des touches toutes identiques d'apparence entre elles. La première grille est alors constituée par un clavier physique.

Les emplacements des cases ou touches sélectionnées successivement par l'utilisateur sont enregistrés et le premier terminal 32 vérifie si la série de symboles entrés par l'utilisateur est identique au code personnel confidentiel. Si la comparaison est positive, l'utilisateur est authentifié. Dans le cas contraire, l'authentification échoue et l'utilisateur peut être invité à recomposer son code personnel confidentiel, soit à l'aide de la même grille 37, soit suite à la génération d'une autre grille (obtenue à partir d'une autre image chiffrée).

Dans le cas d'un paiement par NFC, après authentification de l'utilisateur au niveau du premier terminal 32, celui-ci est invité à effectuer un second « tap » à l'aide de son premier terminal 32 sur le lecteur NFC 31 pour valider la transaction (effectuer le paiement). Le lecteur NFC peut à cet effet être relié à un site bancaire 44.

Un des avantages de la solution proposée est que les premier et deuxième terminaux n'ont pas besoin d'être connectés : le smartphone 32 peut générer l'image chiffrée sans être connecté au réseau et les lunettes intelligentes 33 peuvent déchiffrer l'image et l'afficher à l'utilisateur sans connexion également.

Dans le cas où le premier terminal 32 est un terminal de paiement, l'utilisateur a préalablement inséré une carte de paiement dans un lecteur associé au premier terminal 32. Ce premier terminal 32 génère une image chiffrée 34 comprenant tous les symboles possibles du code personnel confidentiel de l'utilisateur (tous les symboles 0 à 9 dans le cas d'un code composé de chiffres). Les symboles sont mélangés et placés dans une grille qui est chiffrée par la clé 38. La disposition des symboles mélangés est transmise à une application résidant dans le terminal de paiement, cette application étant chargée d'effectuer la correspondance entre les symboles mélangés (présentés à l'utilisateur dans la grille 37) et ceux entrés ultérieurement manuellement par l'utilisateur. L'image chiffrée est déchiffrée par le second terminal 33 et présentée à l'utilisateur. Celui-ci voit alors la seconde grille « en clair » et entre successivement les positions des symboles de son code personnel confidentiel dans une grille (première grille virtuelle ou physique). Ces emplacements successifs sont enregistrés et transmis à l'application susmentionnée. Celle-ci indique alors à la carte de paiement quels symboles ont été successivement entrés par l'utilisateur et la carte vérifie si les symboles sélectionnés par l'utilisateur correspondent à ceux de son code personnel confidentiel. Si l'authentification est positive, le paiement est validé.

Le fonctionnement ci-dessus s'applique également lorsque le terminal 32 est un distributeur de billets (la comparaison est effectuée dans la carte de paiement/retrait).

L'exemple précédent fait appel à un affichage d'une image chiffrée mais il est également possible de transmettre du premier terminal 32 au second terminal 33 une série désordonnée de symboles dont un sous-ensemble constitue le code personnel confidentiel par une connexion radio courte distance, par exemple Bluetooth, IrDA ou NFC ou par une connexion réseau local (par exemple Wi-Fi). Il est également possible de transmettre cette série désordonnée par des impulsions optiques (flux de lumière clignotant). Il n'est dans ce cas pas nécessaire de chiffrer la série désordonnée de symboles puisque seul l'utilisateur du second terminal 13 sera capable de voir les symboles désordonnés. De manière plus générique, l'invention consiste donc à :
a. Afficher sur un écran du second terminal 33 la série désordonnée de symboles dans la seconde grille 37, chaque symbole de la série étant contenu dans une case de la seconde grille 37 ;
b. Entrer, par l'utilisateur 30 sur le premier terminal 32, le code personnel confidentiel dans la première grille 39, aux emplacements correspondants des symboles du code personnel confidentiel dans la seconde grille 37 ;
c. Vérifier, au niveau du premier terminal 32 ou du serveur distant 50, que la série de symboles entrés par l'utilisateur 30 est identique au code personnel confidentiel, afin d'authentifier l'utilisateur 30.

Dans le cas d'un accès sécurisé à un site distant, par exemple à un site bancaire ou un site de messagerie, l'utilisateur est invité à s'authentifier auprès du site distant en entrant un code ou un mot de passe (code personnel confidentiel) dans son ordinateur, son smartphone ou sa tablette. L'ordinateur, le smartphone ou la tablette constituent alors le premier terminal. Le site distant génère l'image chiffrée et la transmet à l'utilisateur. A l'aide de lunettes intelligentes ou d'un smartphone (second terminal appartenant à l'utilisateur), l'image est déchiffrée et l'utilisateur entre successivement les symboles de son code ou de son mot de passe dans une grille virtuelle (smartphone ou tablette possédant un écran tactile) ou physique (ordinateur coopérant avec un clavier alphanumérique), au vu de la disposition des symboles de son code ou mot de passe dans l'image déchiffrée. Les positions successives des symboles sélectionnés par l'utilisateur sont alors transmises au site distant qui vérifie si les positions des symboles successivement sélectionnés par l'utilisateur correspondent aux symboles du code ou du mot de passe de l'utilisateur.

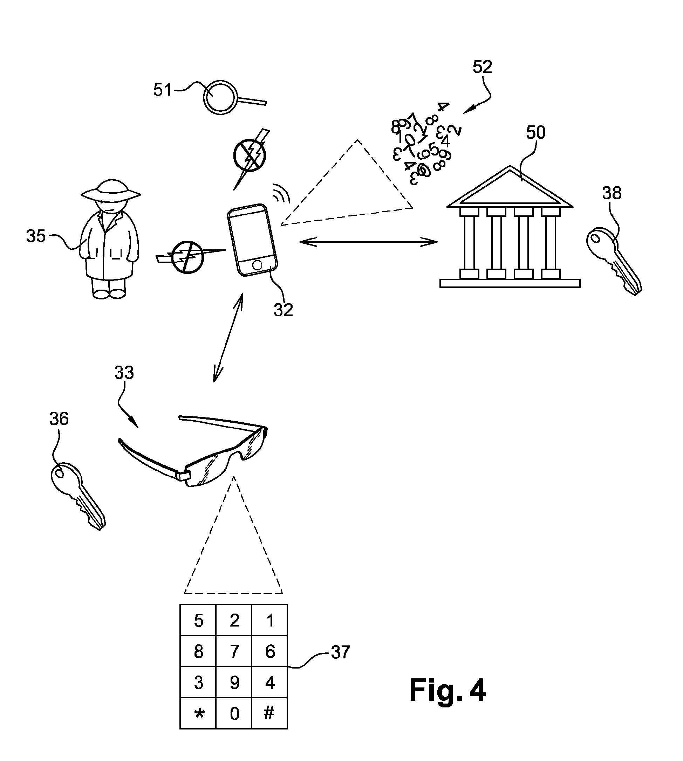

La figure 4 représente un système où est mis en oeuvre cet accès sécurisé à un site distant.

Ici, un utilisateur d'un smartphone 32 constituant le premier terminal souhaite se connecter à un site Internet 50 de sa banque, par exemple pour une consultation de son compte bancaire. Une liaison 3G ou 4G est établie entre le site bancaire 50 et le smartphone 32. Afin d'authentifier l'utilisateur, le site bancaire chiffre une grille comprenant tous les symboles possibles d'un code confidentiel à l'aide de la clé de chiffrement 38. Ces symboles sont désordonnés dans la grille. La grille chiffrée est transmise à l'utilisateur et s'affiche sur l'écran du smartphone 32. Un espion 35 ou un logiciel espion 51 ne voit qu'une image chiffrée 52. A l'aide de son second terminal 33 (ici des lunettes intelligentes) comprenant la clé de déchiffrement 36, une photographie de l'image chiffrée est prise et une grille 37 déchiffrée s'affiche sur les lunettes intelligentes 33. L'utilisateur entre alors dans son premier terminal 32, dans une grille virtuelle (cases transparentes ou blanches), son code personnel confidentiel. Les positions des symboles du code sont transmises au site bancaire 50 qui vérifie que les positions des symboles entrés par l'utilisateur dans la grille virtuelle correspondent bien aux positions des symboles du code personnel confidentiel de l'utilisateur avant chiffrement de la grille transmise à cet utilisateur. Si les positions correspondent, l'utilisateur est authentifié.

Les espions 35 et 51 ne voient qu'une image chiffrée et des appuis successifs sur certaines touches transparentes ou blanches mais n'ont aucune connaissance du code entré par l'utilisateur dans son terminal 32.

Les chiffrements et déchiffrements peuvent être basés sur des algorithmes à base de clés symétriques (la clé de chiffrement est la même que la clé de déchiffrement) ou asymétriques (la clé de chiffrement est une clé publique et la clé de déchiffrement est une clé privée).

De même que précédemment, l'affichage d'une image chiffrée n'est pas nécessaire lorsqu'une communication radio ou infra-rouge ou par un réseau Wi-Fi est établie entre le premier et le second terminal.

L'invention concerne également un premier terminal 32, ce terminal 32 comprenant des moyens pour :
a. Transmettre au second terminal 33 appartenant à l'utilisateur 30 une série désordonnée de symboles dont un sous-ensemble constitue un code personnel confidentiel de l'utilisateur 30 ;
b. Afficher la première grille 39 virtuelle dans laquelle l'utilisateur 30 peut sélectionner des emplacements correspondant à des emplacements de symboles affichés dans la seconde grille 37 sur le second terminal 33.

La comparaison du code entré par l'utilisateur avec le code personnel confidentiel peut être réalisée localement et dans ce cas le premier terminal 32 comprend également des moyens pour vérifier que la série de symboles entrés par l'utilisateur 30 dans la première grille virtuelle 39 est identique au code personnel confidentiel, ou alors à distance et dans ce cas le premier terminal comprend des moyens pour transmettre la série de symboles entrés par l'utilisateur 30 dans la première grille virtuelle au serveur distant 50.

L'invention concerne également un second terminal 33 comportant des moyens pour :
a- Recevoir d'un premier terminal 32 une série désordonnée de symboles dont un sous-ensemble constitue un code personnel confidentiel de l'utilisateur ;
b- Afficher sur l'écran du second terminal 33 la série désordonnée de symboles dans la seconde grille 37, chaque symbole de la série étant contenu dans une case de la seconde grille 37.

Dans le cas où une image chiffrée est utilisée, le terminal 33 comprend en outre des moyens de déchiffrement de l'image chiffrée 34 affichée sur l'écran du premier terminal 32 à l'aide d'une caméra prévue sur le second terminal 33 et d'une clé de déchiffrement 36, l'image chiffrée 34 comprenant la série désordonnée de symboles dont un sous-ensemble constitue le code personnel confidentiel de l'utilisateur 30.

Le terminal d'utilisateur 33 est préférentiellement constitué par des lunettes intelligentes 33.

Enfin l'invention concerne un système d'authentification de l'utilisateur 30 auprès du premier terminal 32 ou du serveur distant 50 connecté au premier terminal 32. Le système comprend :
- Des moyens pour transmettre du premier terminal 32 au second terminal 33 une série désordonnée de symboles dont un sous-ensemble constitue le code personnel confidentiel ;
- Des moyens pour afficher sur l'écran du second terminal 33 la série désordonnée de symboles dans la seconde grille 37, chaque symbole de la série étant contenu dans une case de la seconde grille 37 ;
- Des moyens pour saisir, par l'utilisateur 30 sur le premier terminal 32, le code personnel confidentiel dans la première grille 39, aux emplacements correspondants des symboles du code personnel confidentiel dans la seconde grille 37 ;
- Des moyens pour vérifier, au niveau du premier terminal 32 ou du serveur distant 50, que la série de symboles entrés par l'utilisateur 30 est identique au code personnel confidentiel, afin d'authentifier l'utilisateur 30.

Dans le cas d'utilisation d'une image chiffrée, le système comprend également :
- des moyens pour afficher sur l'écran coopérant avec le premier terminal 32 l'image chiffrée 34 comprenant une série désordonnée de symboles dont un sous-ensemble constitue le code personnel confidentiel ;
- des moyens pour déchiffrer, à l'aide du second terminal 33, l'image chiffrée 34 à l'aide d'une caméra prévue sur le second terminal 33 et d'une clé de déchiffrement 36.

## Revendications

1. Procédé d'authentification d'un utilisateur (30) auprès d'un premier terminal (32) ou d'un serveur distant (50) connecté au premier terminal (32), l'authentification consistant à entrer un code dans le premier terminal (32) par l'utilisateur (30) et à comparer ce code à un code personnel confidentiel de l'utilisateur (30), ledit code personnel confidentiel comprenant des symboles à entrer successivement par ledit utilisateur (30) dans ledit premier terminal (32), **caractérisé en ce qu'**il consiste à :
a- Transmettre dudit premier terminal (32) à un second terminal (33) appartenant audit utilisateur une série désordonnée de symboles dont un sous-ensemble constitue ledit code personnel confidentiel ;
b- Afficher sur un écran dudit second terminal (33) ladite série désordonnée de symboles dans une grille (37), appelée seconde grille (37), chaque symbole de ladite série étant contenu dans une case de ladite seconde grille (37) ;
c- Entrer, par ledit utilisateur (30) sur ledit premier terminal (32), ledit code personnel confidentiel dans une grille (39), appelée première grille (39), aux emplacements correspondants des symboles dudit code personnel confidentiel dans ladite seconde grille (37) ;
d. Vérifier, au niveau dudit premier terminal (32) ou dudit serveur distant (50), que la série de symboles entrés par ledit utilisateur (30) est identique audit code personnel confidentiel, afin d'authentifier ledit utilisateur (30).

2. Procédé selon la revendication 1, **caractérisé en ce que** :
- l'étape -a- comprend une étape d'affichage sur un écran coopérant avec ledit premier terminal (32) d'une image chiffrée (34) comprenant une série désordonnée de symboles dont un sous-ensemble constitue ledit code personnel confidentiel ;
- l'étape -b- comprend une étape de déchiffrement, à l'aide dudit second terminal (33), de ladite image chiffrée (34) à l'aide d'une caméra prévue sur ledit second terminal (33) et d'une clé de déchiffrement (36).

3. Procédé selon la revendication 1, **caractérisé en ce que** l'étape -a- comprend une étape de transmission par une connexion radio courte distance ou d'une connexion réseau local de ladite série désordonnée de symboles dudit premier terminal (32) audit second terminal (33).

4. Procédé selon la revendication 2, **caractérisé en ce que** ladite image chiffrée (34) est un code QR.

5. Procédé selon l'une des revendications 1 à 4, **caractérisé en ce que** ledit second terminal (33) est un smartphone.

6. Procédé selon l'une des revendications 1 à 4, **caractérisé en ce que** ledit second terminal est une paire de lunettes intelligentes (33).

7. Procédé selon l'une des revendications 1 à 6, **caractérisé en ce que** ledit premier terminal (32) est un distributeur de billets.

8. Procédé selon l'une des revendications 1 à 6, **caractérisé en ce que** le premier terminal (32) est un terminal d'un point de vente.

9. Terminal (32), appelé premier terminal (32), **caractérisé en ce qu'**il comporte des moyens pour :
a- Transmettre à un second terminal (33) appartenant à un utilisateur (30) une série désordonnée de symboles dont un sous-ensemble constitue un code personnel confidentiel dudit utilisateur (30) ;
b- Afficher une première grille (39) virtuelle dans laquelle ledit utilisateur (30) peut sélectionner des emplacements correspondant à des emplacements de symboles affichés dans une seconde grille (37) sur ledit second terminal (33).

10. Terminal selon la revendication 9, **caractérisé en ce qu'**il comprend également des moyens pour vérifier que la série de symboles entrés par ledit utilisateur (30) dans ladite première grille virtuelle (39) est identique audit code personnel confidentiel, afin d'authentifier ledit utilisateur (30).

11. Terminal selon la revendication 9, **caractérisé en ce qu'**il comprend également des moyens pour transmettre la série de symboles entrés par ledit utilisateur (30) dans ladite première grille virtuelle à un serveur distant (50).

12. Terminal d'utilisateur (33), appelé second terminal (33), **caractérisé en ce qu'**il comporte des moyens pour :
a- Recevoir d'un premier terminal (32) une série désordonnée de symboles dont un sous-ensemble constitue un code personnel confidentiel dudit utilisateur ;
b- Afficher sur un écran dudit second terminal (33) ladite série désordonnée de symboles dans une grille (37), appelée seconde grille (37), chaque symbole de ladite série étant contenu dans une case de ladite seconde grille (37).

13. Terminal d'utilisateur (33) selon la revendication 12, **caractérisé en ce qu'**il comprend également des moyens de déchiffrement d'une image chiffrée (34) affichée sur un écran dudit premier terminal (32) à l'aide d'une caméra prévue sur ledit second terminal (33) et d'une clé de déchiffrement (36), ladite image chiffrée (34) comprenant ladite série désordonnée de symboles dont un sous-ensemble constitue ledit code personnel confidentiel dudit utilisateur (30).

14. Terminal d'utilisateur (33) selon l'une des revendications 12 et 13, **caractérisé en ce qu'**il est constitué par des lunettes intelligentes (33).

15. Système d'authentification d'un utilisateur (30) auprès d'un premier terminal (32) ou d'un serveur distant (50) connecté audit premier terminal (32), l'authentification consistant à entrer un code dans ledit premier terminal (32) par ledit utilisateur (30) et à comparer ce code à un code personnel confidentiel dudit utilisateur (30), ledit code personnel confidentiel comprenant des symboles à entrer successivement par ledit utilisateur (30) dans ledit premier terminal (32), **caractérisé en ce qu'**il comprend :
a- Des moyens pour transmettre dudit premier terminal (32) à un second terminal (33) appartenant audit utilisateur une série désordonnée de symboles dont un sous-ensemble constitue ledit code personnel confidentiel ;
b- Des moyens pour afficher sur un écran dudit second terminal (33) ladite série désordonnée de symboles dans une grille (37), appelée seconde grille (37), chaque symbole de ladite série étant contenu dans une case de ladite seconde grille (37) ;
c- Des moyens pour saisir, par ledit utilisateur (30) sur ledit premier terminal (32), ledit code personnel confidentiel dans une grille (39), appelée première grille (39), aux emplacements correspondants des symboles dudit code personnel confidentiel dans ladite seconde grille (37) ;
d- Des moyens pour vérifier, au niveau dudit premier terminal (32) ou dudit serveur distant (50), que ladite série de symboles entrés par ledit utilisateur (30) est identique audit code personnel confidentiel, afin d'authentifier ledit utilisateur (30).

16. Système selon la revendication 15, **caractérisé en ce qu'**il comprend également :
a- des moyens pour afficher sur un écran coopérant avec ledit premier terminal (32) une image chiffrée (34) comprenant une série désordonnée de symboles dont un sous-ensemble constitue ledit code personnel confidentiel ;
b- des moyens pour déchiffrer, à l'aide dudit second terminal (33), ladite image chiffrée (34) à l'aide d'une caméra prévue sur ledit second terminal (33) et d'une clé de déchiffrement (36).
